# EUROPEAN PATENT SPECIFICATION

(11) **EP 0 980 838 B1**
(45) Date of publication and mention of the grant of the patent: **26.11.2003**
(21) Application number: 99306320.5
(22) Date of filing: 10.08.1999
(51) Int. Cl.: B65G 53/42, B65G 53/24, B65G 53/52

(54) **Suction conduit assembly**
Saugleitungseinheit
Unité de conduit d'aspiration

(30) Priority: 14.08.1998 GB 9817640
(43) Date of publication of application: 23.02.2000
(73) Proprietor: Carroll, John Joseph, Freemantle, Southampton SO1 3AL (GB)
(72) Inventor: Carroll, John Joseph, Freemantle, Southampton SO1 3AL (GB)
(74) Representative: Lomas, Geoffrey Michael

(56) References cited:
- EP-A- 0 765 829
- DE-A- 3 217 398
- GB-A- 2 292 132

## Description

This invention relates to suction conduit assemblies through which materials, primarily sand or aggregate, are conveyed. However, the invention may also be applied to conveying other materials, for example snow.

In UK patent specification no. GB 2292132B there is disclosed apparatus for pneumatically conveying batches of material from a batch holding vessel, the apparatus comprising batch loading means adapted to load the batch holding vessel with material, the batch loading means comprising a delivery conduit through which the material is conveyed in use by fluid flow means into the holding vessel, the holding vessel housing an agitation assembly adapted to mix material held in the holding vessel. One problem encountered with the apparatus described in the aforementioned patent is that, as the fluid flow means is applied to the heap of material the fluid flow means needs to be repositioned frequently so that it is always close enough to a part of the heap of material to suck further material into the holding vessel.

This requirement of repositioning is both time-consuming and requires considerable effort if carried out by hand.

DE 3217398 Al discloses a suction elevator unit for pneumatically transporting bulk material from one level to a higher level. The elevator unit comprises a conduit assembly consisting of two telescopically joined conduit sections, and a vertical supply hose connected to the free end of the conduit assembly.

According to the present invention there is provided a suction conduit assembly for sucking up material from a heap, the suction conduit assembly comprising first and second pipe sections, characterised in that the second pipe section is reciprocable relative to the first pipe section to vary the effective length of the conduit assembly, and the second pipe section comprises a heap penetrating free end provided with an open intake, without a supply hose connected thereto, the suction conduit assembly further comprising hydraulic means for moving the second section axially relative to the first pipe section towards and away from the heap of material whereby the intake can, in use, be inserted into and removed from the material in the heap by operation of the hydraulic means.

Preferably the second pipe section is reciprocable relative to the first pipe section with a telescopic movement.

Preferably the suction conduit assembly is provided with means operable to vibrate the intake.

According to a second aspect of the present invention we provide suction apparatus comprising a suction conduit assembly in accordance with the first aspect of the invention, the suction apparatus further comprising a holding vessel which is in communication with the suction conduit assembly and in use the holding vessel is held at a pressure which is sufficient to create suction at the intake through which material enters the suction conduit assembly.

Preferably the suction conduit assembly is releasably attached to the holding vessel.

Preferably the suction conduit assembly is rotatably attached to the holding vessel.

An embodiment of the invention will now be described, by way of example only, with reference to the accompanying drawings, in which:
**Figure 1** is a side elevation of a suction conduit assembly in accordance with the invention attached to a holding vessel,
**Figure 2** is a plan view of the embodiment shown in Figure 1 which is in part in cross-section,
**Figure 3** is an enlarged view of Figure 2, and
**Figure 3A** is an enlarged view of the area circled in Figure 3.

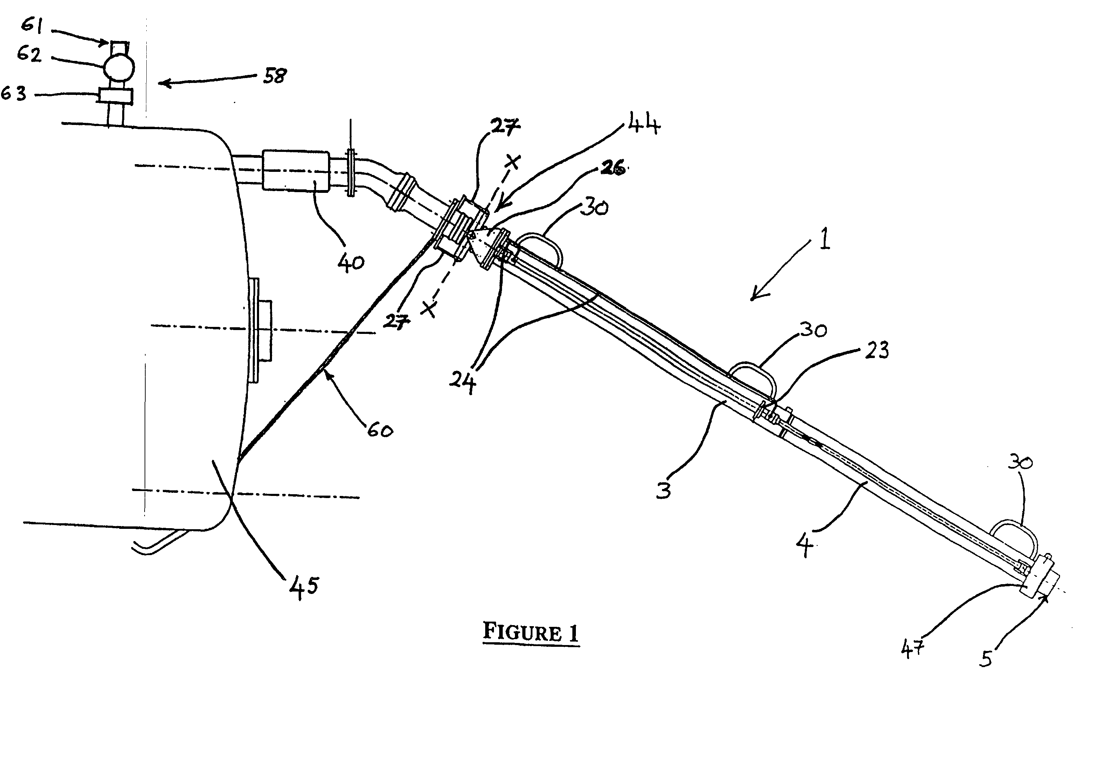

Referring to Figure 1, a suction conduit assembly 1 through which material is conveyed comprises a first pipe section 3, a second pipe section 4 and an intake 5.

The bore of the first pipe section 3 is dimensioned such that the second pipe 4 is capable of telescopic movement within said first pipe section 3 so that the effective length of the suction conduit assembly can be varied.

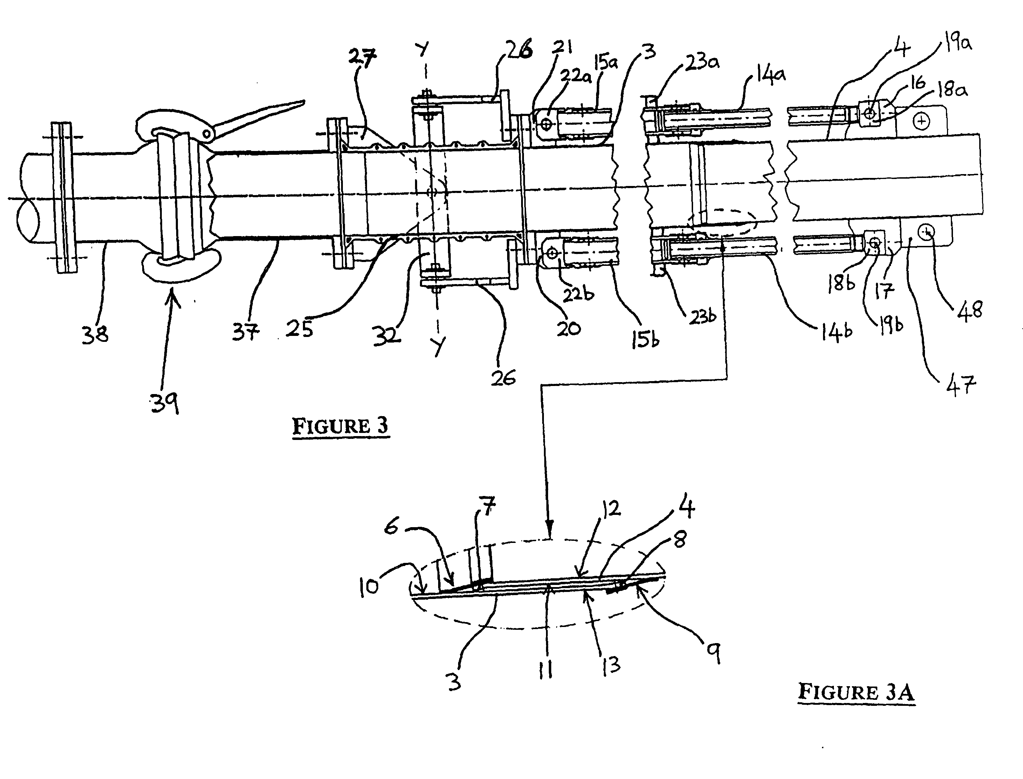

Turning to Figures 3 and 3A, attached to the inner surface 12 of the distal end 7 of second pipe section 4 is a sealing skirt 6. The sealing skirt 6 is of substantially frusto-conical shape and forms a substantial seal with the inner surface 10 of the first pipe section 3.

Similarly, a sealing skirt 9 is provided on the outer surface 13 of the distal end 8 of the first pipe section 3. The sealing skirt 9 is of substantially frusto-conical shape and forms a substantial seal with the outer surface 11 of the second pipe section 4. The distal end 7 and the distal end 8 are flared and tapered respectively to ensure sealing contact of the skirts with the respective surfaces.

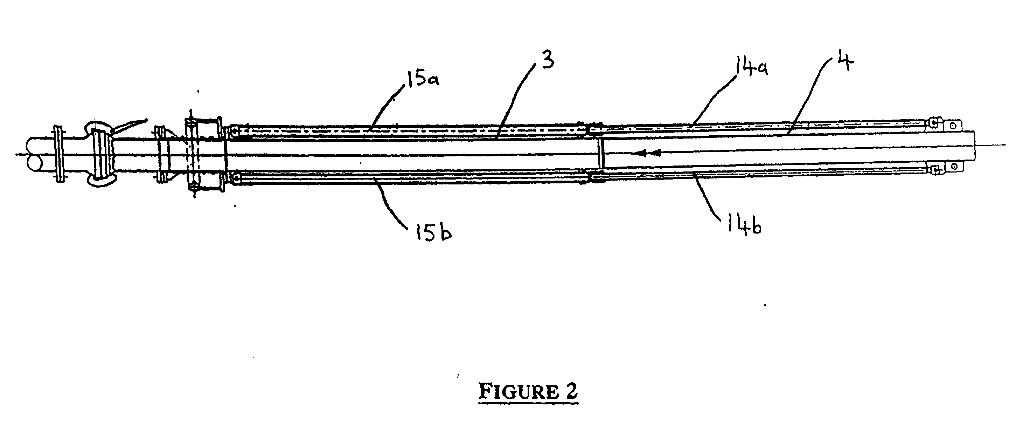

The suction conduit assembly 1 further comprises pistons 14a and 14b and associated hydraulic cylinders 15a and 15b. The pistons 14a and 14b are secured to the second pipe section 4 in the following manner. Two pairs of plates 16 and 17 (one plate of each pair is shown in Figures 2 and 3) which are rigidly attached to the second pipe, are spaced so as to accommodate bored portions 18a and 18b. Bores 19a and 19b are aligned with holes in the plate pairs 16 and 17 so that securing pins (not shown) can pass therethrough. The bored portions 18a and 18b are attached to the respective pistons by ball joints (not shown). The pistons 14a and 14b are actuated by respective hydraulic lines 24, the hydraulic lines being in communication with opposite ends of each cylinder 15a and 15b. The pistons 14a and 14b may conveniently be powered from the hydraulic system associated with the holding vessel 45 if one is so provided.

Each of the hydraulic cylinders 15a and 15b is attached at two locations on the first pipe section 3. The hydraulic cylinders are secured in the first instance by securing pins (not shown) through plate pairs 20 and 21 (one plate of each pair is shown in Figures 2 and 3) and bored portions 22a and 22b, and in the second instance by support collars 23a and 23b. The bored portions 22a and 22b are attached to the respective cylinders by ball joints (not shown).

A gimbal 44 comprising two double-limbed components 26 and 27 and frame 32 is provided between the first pipe section 3 and pipe 37, the double-limbed components 26 and 27 partially surrounding a length of flexible hosing 25. The flexible hosing 25 is preferably of the design disclosed in UK patent specification no. GB 2218178B. The double-limbed component 26 is attached to frame 32 for rotation of the pipe sections 3 and 4 about an axis Y-Y. The double-limbed component 27 is attached to the frame 32 in a plane perpendicular to the axis Y-Y for rotation of the pipe sections 3 and 4 about an axis X-X. The pipe 37 is clamped to pipe 38 by a Bauer clamp 39, and the pipe 38 leads up to a shut-off valve 40 and then into a holding vessel 45. The holding vessel 45 may house agitators for mixing materials therein.

A vibrator 47 is provided on the second pipe section 4 and comprises a circular track 48 around which a ball bearing is circulated by means of a compressed air supply (not shown).

A support rod 60 is provided between the underside of the suction conduit assembly 1 and the holding vessel 45.

In use the assembly operates as follows.

Evacuation means 58 comprises an air outlet 61, an evacuation pump 62 and an isolation valve 63. The evacuation pump 62 is advantageously a jet pump since it is not practicable to protect the pump with certainty from solid particles. The jet pump is preferably of the type known as GENFLO®. If the holding vessel 45 is part of apparatus for pneumatically conveyed batches of mixed material, then the jet pump may conveniently be driven from the air compressor used therefor.

After the shut-off valve 40 has been opened and the evacuation pump has been started, an operator then directs the intake 5 of the second pipe section 4 at a heap of material (not shown) to be loaded into the holding vessel 45. The operator then, via suitable controls, extends the second pipe section 4 to penetrate the heap of material and in so doing material is taken into the conduit assembly 1 and then into the holding vessel 45. Once the second pipe section 4 has been fully extended, said second pipe section 4 is then retracted out of the heap after which the second pipe section 4 is again extended into the heap to load further material into the holding vessel 45. This repeated extension and retraction of the second pipe section 4 thus produces a reciprocating action, the rate of which is determined by the characteristics of the material to be loaded. The vibrator 47 produces an orbital motion of the intake 5 thus ensuring that the intake 5 does not clog and that any clumps of material around the intake in the heap are loosened.

If the holding vessel 45 is part of apparatus to convey batches of mixed material pneumatically then once the required amount of material has been loaded in the vessel the valves 40 and 63 can be turned off and an outlet valve (not shown) opened. The holding vessel can then be pressurised to force the mixed material out of the vessel.

Handles 30 mounted on the pipe sections 3 and 4 ensure that once the suction conduit assembly is detached by clamp 39 it can be carried with a reduced risk of causing damage.

In a modification of the assembly 1, the gimbal 44 may be adapted to be used with or replaced by appropriate servo means so as to control the rotational movement of the suction conduit assembly.

In another modification of the invention, the second pipe section 4 may be provided with an attachment to facilitate the loading process of a given material. The attachment may, for example, comprise an actuated scoop to capture material in the heap to be sucked away through the intake 5.

Although the invention is primarily for use in the construction industry, it should be appreciated that the present invention will find utility in many different situations outside the construction industry.

In a modification of the illustrated assembly, a screw conveyor such as an Archimedian screw is provided between the second pipe section 4 (ie the reciprocating section) and the holding vessel 45. This modified arrangement is such that material is drawn into the second pipe section 4 by a vacuum and is then conveyed into the holding vessel at least in part by the screw conveyor.

## Claims

1. A suction conduit assembly (1) for sucking up material from a heap, the suction conduit assembly (1) comprising first and second pipe sections (3,4), **characterised in that** the second pipe section (4) is reciprocable relative to the first pipe section (3) to vary the effective length of the conduit assembly, and the second pipe section (4) comprises a heap penetrating free end provided with an open intake (5), the suction conduit assembly (1) further comprising hydraulic means for moving the second section (4) axially relative to the first pipe section (3) towards and away from the heap of material whereby the intake (5) can, in use, be inserted into and removed from the material in the heap by operation of the hydraulic means.

2. A suction conduit assembly (1) as claimed in claim 1 in which the second pipe section (4) is reciprocable relative to the first pipe section (3) with a telescopic movement.

3. A suction conduit assembly (1) as claimed in any preceding claim in which the suction conduit assembly (1) is provided with means (47) operable to vibrate the intake (5).

4. Suction apparatus (1;45) comprising a suction conduit assembly (1) as claimed in any preceding claim, the suction apparatus further comprising a holding vessel (45) which is in communication with the suction conduit assembly (1) and in use the holding vessel (45) is held at a pressure which is sufficient to create suction at the intake (5) through which material enters the suction conduit assembly (1).

5. Suction apparatus (1;45) as claimed in claim 4 in which the suction conduit assembly (1) is releasably attached to the holding vessel (45) .

6. Suction apparatus (1;45) as claimed in any one of claims 4 or 5 in which the suction conduit assembly (1) is rotatably attached to the holding vessel (45).

7. Suction apparatus (1;45) as claimed in any one of claims 4, 5 or 6 in which the holding vessel (45) houses an agitation assembly adapted to mix material held in the holding vessel.

8. Suction apparatus (1;45) as claimed in any one of claims 4, 5, 6 or 7 in which the suction apparatus (1;45) is capable of conveying batches of mixed material pneumatically.

## Patentansprüche

1. Saugleitungseinheit (1) zum Aufsaugen von Material aus einem Haufen bzw. einer Halde, wobei die Saugleitungseinheit (1) einen ersten und einen zweiten Rohrabschnitt (3, 4) umfasst, **dadurch gekennzeichnet, dass** der zweite Rohrabschnitt (4) relativ zum ersten Rohrabschnitt (3) hin und her bewegbar ist, um die effektive Länge der Saugleitung zu variieren, und der zweite Rohrabschnitt (4) umfasst ein in den Haufen bzw. die Halde eindringendes freies Ende, das mit einer offenen Ansaugöffnung (5) versehen ist, wobei die Saugleitungseinheit (1) weiterhin eine hydraulische Einrichtung zum axialen Bewegen des zweiten Abschnitts (4) relativ zu dem ersten Rohrabschnitt (3) auf den Materialhaufen zu und von ihm weg umfasst, wodurch die Ansaugöffnung (5) beim Gebrauch durch Betätigen der hydraulischen Einrichtung in das aufgehäufte Material eingeführt und aus ihm herausgezogen werden kann.

2. Saugleitungseinheit (1) nach Anspruch 1, wobei der zweite Rohrabschnitt (4) relativ zu dem ersten Rohrabschnitt (3) in einer Teleskopbewegung hin und her bewegbar ist.

3. Saugleitungseinheit (1) nach einem der vorhergehenden Ansprüche, wobei die Saugleitungseinheit (1) mit einem Mittel (47) versehen ist, das betätigt werden kann, um die Ansaugöffnung (5) in Vibration zu versetzen.

4. Sauggerät (1; 45), umfassend eine Saugleitungseinheit (1) nach einem der vorhergehenden Ansprüche, wobei das Sauggerät außerdem einen Aufnahmebehälter (45) umfasst, der mit der Saugleitungseinheit (1) verbunden ist und welcher Aufnahmebehälter (45) beim Gebrauch unter Druck gehalten wird, der ausreichend ist, um einen Sog an der Ansaugöffnung (5) zu erzeugen, durch die Material in die Saugleitungseinheit (1) eintritt.

5. Sauggerät (1; 45) nach Anspruch 4, wobei die Saugleitungseinheit (1) lösbar an dem Aufnahmebehälter (45) befestigt ist.

6. Sauggerät (1; 45) nach einem der Ansprüche 4 oder 5, wobei die Saugleitungseinheit (1) drehbar an dem Aufnahmebehälter (45) befestigt ist.

7. Sauggerät (1; 45) nach einem der Ansprüche 4, 5 oder 6, wobei der Aufnahmebehälter (45) eine Rührvorrichtung enthält, die so angepasst ist, dass sie in dem Aufnahmebehälter befindliches Material vermischt.

8. Sauggerät (1; 45) nach einem der Ansprüche 4, 5, 6 oder 7, wobei das Sauggerät (1; 45) imstande ist, Mengen vermischten Materials pneumatisch zu befördern.

## Revendications

1. Ensemble de conduit d'aspiration (1) permettant d'aspirer un amoncellement, l'ensemble de conduit d'aspiration (1) comprenant des première et seconde sections de tuyau (3, 4), **caractérisé en ce que** la seconde section de tuyau (4) peut effectuer un mouvement de va-et-vient avec la première section de tuyau (3) pour faire varier la longueur effective de l'ensemble de conduit, et la seconde section de tuyau (4) comprend une extrémité libre pénétrant dans l'amoncellement, munie d'un orifice d'admission ouvert (5), l'ensemble de conduit d'aspiration (1) comprenant en outre un moyen hydraulique permettant de déplacer la seconde section (4) axialement par rapport à la première section de tuyau (3) en direction de, ou pour l'éloigner de l'amoncellement de matériau, grâce à quoi l'orifice d'admission (5) peut, au cours de l'utilisation, être inséré dans et retiré du matériau de l'amoncellement, en faisant fonctionner le moyen hydraulique.

2. Ensemble de conduit d'aspiration (1) selon la revendication 1, dans lequel la seconde section de tuyau (4) peut effectuer un mouvement de va-et-vient avec la première section de tuyau (3), avec un mouvement télescopique.

3. Ensemble de conduit d'aspiration (1) selon l'une quelconque des revendications précédentes, dans lequel l'ensemble de conduit d'aspiration (1) est muni de moyens (47) qui peuvent fonctionner pour faire vibrer l'orifice d'admission (5).

4. Appareil d'aspiration (1 ; 45) comprenant un ensemble de conduit d'aspiration (1) selon l'une quelconque des revendications précédentes, l'appareil d'aspiration comprenant en outre une cuve de retenue (45) qui est en communication avec l'ensemble de conduit d'aspiration (1) et, en cours d'utilisation, la cuve de retenue (45) est maintenue à une pression qui est suffisante pour créer l'aspiration au niveau du orifice d'admission (5), par lequel le matériau pénètre dans l'ensemble de conduit d'aspiration (1).

5. Appareil d'aspiration (1 ; 45) selon la revendication 4, dans lequel l'ensemble de conduit d'aspiration (1) est fixé, de manière détachable, sur la cuve de retenue (45).

6. Appareil d'aspiration (1 ; 45) selon l'une quelconque des revendications 4 ou 5, dans lequel l'ensemble de conduit d'aspiration (1) est fixé, pour tourner, à la cuve de retenue (45).

7. Appareil d'aspiration (1 ; 45) selon l'une quelconque des revendications 4, 5 ou 6, dans lequel la cuve de retenue (45) abrite un ensemble d'agitation conçu pour mélanger le matériau contenu dans la cuve de retenue.

8. Appareil d'aspiration (1 ; 45) selon l'une quelconque des revendications 4, 5, 6 ou 7, dans lequel l'appareil d'aspiration (1 ; 45) est capable de transporter des lots de matériau mélangé grâce à un procédé pneumatique.
